# Europäisches Patentamt
## European Patent Office
### Office européen des brevets

(19)

(11) Publication number: **0 061 191**
**B1**

(12)

# EUROPEAN PATENT SPECIFICATION

(45) Date of publication of patent specification: **27.08.86**

(21) Application number: **82102366.0**

(22) Date of filing: **22.03.82**

(51) Int. Cl.⁴: **F 24 J 3/00, F 25 B 17/08,**
**F 25 B 29/00, F 17 C 11/00**

(54) Metal hydride reactor.

(30) Priority: 23.03.81 JP 40879/81
07.07.81 JP 101611/81
07.07.81 JP 101612/81
07.07.81 JP 101613/81
22.06.81 JP 91928/81
22.06.81 JP 91929/81
23.03.81 JP 42667/81
08.12.81 JP 197937/81
17.02.82 JP 25180/82

(43) Date of publication of application:
29.09.82 Bulletin 82/39

(45) Publication of the grant of the patent:
27.08.86 Bulletin 86/35

(84) Designated Contracting States:
DE FR GB IT NL

(56) References cited:
DE-A-2 615 630
DE-A-2 736 505
DE-A-2 808 876
DE-A-2 855 476
DE-A-2 928 850
DE-B-2 048 513
US-A-4 161 211
US-A-4 187 092
US-A-4 203 711

(73) Proprietor: SEKISUI KAGAKU KOGYO
KABUSHIKI KAISHA
4-4 Nishitemma 2-chome
Kita-ku Osaka 530 (JP)

(72) Inventor: Nishizaki, Tomoyoshi
31-B-811 Yamadahigashi 1-chome
Suita-shi, Osaka-fu (JP)
Inventor: Miyamoto, Minoru
1494-31, Minamikasa-cho
Kusatsu-shi, Shiga-ken (JP)
Inventor: Miyamoto, Kazuaki
1-2-905, Minamitsukaguchi-cho 2-chome
Amagasaki-shi, Hyogo-ken (JP)
Inventor: Yoshida, Ken
4-3, Funaki-cho
Ibaraki-shi, Osaka-fu (JP)
Inventor: Yamaji, Kathuhiko
2-2, Hyakuyama, Shimamoto-cho
Mishima-gun, Osaka-fu (JP)
Inventor: Nakata, Yasushi
2-2, Hyakuyama, Shimamoto-cho
Mishima-gun, Osaka-fu (JP)

(74) Representative: Bühling, Gerhard, Dipl.-Chem.
et al
Patentanwaltsbüro Tiedtke-Bühling-Kinne
Grupe-Pellmann-Grams-Struif Bavariaring 4
D-8000 München 2 (DE)

EP 0 061 191 B1

Courier Press, Leamington Spa, England.

## Description

This invention relates to a metal hydride reactor according to the preamble of claim 1.

A reactor of this type is known from US—A—4 203 711.

In the receptacle of the reactor, the reversible chemical reactions of a metal hydride with hydrogen gas take place, and for this purpose the receptacle consists of a thin-walled tube having an opening at its one end, wherein a porous member extends along the central axis, the space between said member and the wall of the tube being filled with metal hydride. The porous member is permeable to hydrogen gas, but impermeable to metal hydride, thus serves as flow passage for the hydrogen within the receptacle and into or out of the receptacle, respectively, the tube being closed at its open end by a porous graft having the same properties as the porous member. To cause the chemical reactions, it is necessary to increase or decrease the temperature in the receptacle, respectively; for this purpose, a heat medium flows around the receptacle which transmits the necessary heat to the receptacle or eliminates the heat produced in the receptacle due to the exothermic reaction. To ensure an effectual chemical reaction it is necessary that the heat exchange is effected uniformly in all places of the metal hydride; however, the bad heat conductivity of the metal hydride itself is opposing this requirement. For this reason, the known arrangement involves the danger that internal metal hydride regions, that is, metal hydride regions in the region of the porous member profit from the heat exchange to a lower extent only and thus do not contribute completely to the chemical reaction.

The object underlying the invention consists in providing a metal hydride reactor, the receptacles of which for the metal hydride permit a heat exchange with the metal hydride, the heat exchange being excellent at any location within the metal hydride.

According to the invention, this object is achieved by the features in the characterizing portion of the claim 1.

According to the invention, heat-conductive fins extending between the wall of the receptacle and the porous member are provided for the achievement of a good heat exchange between the heat medium and the metal hydride. However, it is not only important for the reactor according to the invention that a heat-conducting fin device is provided at all within the receptacle but also that this fin device has a tubular member in addition to the axially extending platelike members, the tubular member being formed unitarily with the plate-like members and being in contact with the inside wall surface of the receptacle.

This design ensures an especially great heat transfer surface between the wall of the receptacle on the one hand, and the fin device on the other hand. Besides, it ensures a good heat transition between tubular member and plate-like members, because the heat flow resistance between these members is low since their elements are unitarily formed.

The US—A—4 203 711 does not provide any heat-conducting fin device within the receptacles of the reactor.

The US—A—4 187 092 discloses a metal hydride reactor of a different type but containing already a heat-conducting fin device of a heat-conductive material in its interior in order to transmit heat between the metal hydride and the heat-exchanging outside wall surface. Therefore this feature of the invention as per claim 1 is known per se, and this known fin device has also the property of limiting the location of the metal hydride in the receptacle.

This known fin device consists of a plurality of elongate tubes with the longitudinal axis of the tubes being parallel to the longitudinal axis of the receptacle. The tubes are packed in the receptacle so that they are in firm contact with each other and the outer tubes are in firm contact with the inside wall surface of the receptacle. However, this known reactor comprises neither plate-like members extending radially inwards from the outside, nor a (single) tubular member in contact with the inside wall surface of the receptacle. Moreover, the fin device of the known reactor has also other properties than the fin device of the invention: in the known case, the heat transit is relatively poor in radial direction due to the numerous line contact areas between the tubes, while the hydrogen diffusion is strongly impeded in radial direction at the same time.

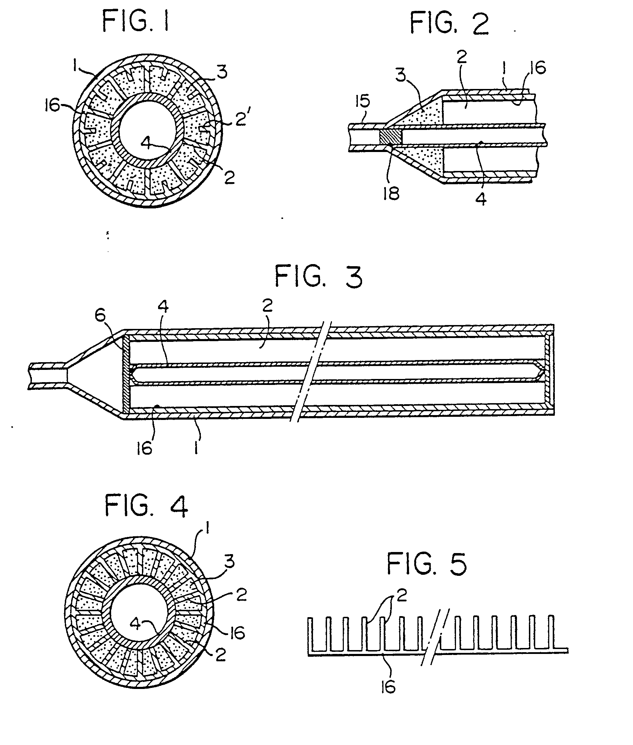

Further, metal hydride reactors are known from the US—A—4 165 569 (see figures 1, 2, 4, 5A, 5B, 6A and 6B) where the heat exchanging surface is formed on the outer surface of the pressure receptacle. In this reactor, which is cooled or heated from the outside, heat-conducting fin devices are not provided in the interior thereof. The US—A—4 165 569 also discloses metal hydride reactors cooled or heated from the inside (see figures 3B, 7A and 7B). In connection with such internally cooled reactors, a fin device is known that has a plurality of plate-like members extending axially along the receptacle. These plate-like members are mounted on the conduit for the working fluid extending through the center of the reactor. Hence, plate-like members were known per se which extend axially along the receptacle for improving the heat exchange. However, in the known case they do not serve the improved heat transport between the metal hydride filling and the outside wall of the receptacle.

Preferably the plate-like members serve simultaneously to fix the position of the tubular porous member.

The preferred embodiments of the invention are described below in detail with reference to the accompanying drawings in which:

Figure 1 is a sectional view, taken across the axis of a receptacle, of one embodiment of this invention;

Figure 2 is a sectional view taken axially of the embodiment shown in Figure 1;

Figure 3 is another sectional view taken axially of the embodiment shown in Figure 1;

Figure 4 is a sectional view, taken across the axis of a receptacle, of another embodiment of this invention; and

Figure 5 is a sectional view showing a method of making the heat-conducting fin shown in Figure 4.

Figures 1 to 3 show an embodiment of the present invention. A metallic fin tube 16 is provided in contact with the inner surface of a cylindrical metallic pressure receptacle 1, and a plurality of metallic heat-conducting fins 2 which are diametrically long and a plurality of metallic heat-conducting fins 2′ which are diametrically short are alternately provided such that they project inwardly from the metallic fin tube 16 toward the axis of the receptacle 1. A tubular porous member 4 (preferably made of a fluorocarbon resin) is supported approximately at the axis of the receptacle by the inside ends of the plurality of diametrically long heat-conducting fins 2. A metal hydride 3 is filled in a plurality of spaces defined by the metal fin tube 16, the heat-conducting fins 2 and 2′ and the porous member 4. The metallic fin tube 16 is in full contact with the pressure receptacle 1 in order to reduce heat resistance. Such a full contact may be obtained, for example, by a method comprising forming the metallic fin tube 16 by extrusion of aluminium and fitting the tubular pressure receptacle 1 over its outside by a drawing technique, a method comprising expanding the metal fin tube by applying pressure to its inside, a method which comprises bonding the metal fin tube to the pressure receptacle with an adhesive, etc.

The pressure receptacle 1 is open at one end and closed at the other. In the embodiment shown in Figure 2, a porous filter 6 permeable to hydrogen gas but impermeable to metal hydride which is composed, for example, of a sintered metallic body is provided at the open end portion of the receptacle 1, and the heat-conducting fins 2, the metallic fin tube 16 and the tubular porous member 4 extend from the closed end of the receptacle 1 to the filter 6. The two ends of the tubular porous member 4 are closed, for example, by heat sealing to prevent the metal hydride from coming into the porous member 4.

In the embodiment shown in Figure 3, one end of the tubular porous member 4 abuts against the narrowed open end portion 15 of the pressure receptacle 1, and between the porous member 4 and the open end portion 15 is disposed a porous cylindrical filter 18 which is permeable to hydrogen gas but impermeable to a metal hydride.

The projecting lengths of the heat-conducting fins 2 from the metallic fin tube 16 may be made equal as shown in Figure 4. The heat-conducting fins shown in Figures 1 and 4 are made, for example, by bending an extrusion-molded article having a comb-like cross section as shown in Figure 5 into a circular shape and inserting it into the receptacle 1. In Figure 5, the spacing between adjacent heat-conducting fins 2 is preferably not more than 5 mm.

**Claims**

1. A metal hydride reactor comprising a tubular pressure receptacle having an opening at its one end and containing a metal hydride filled therein, at least a part of the outside wall surface of the pressure receptacle forming a heat-exchanging surface, and a porous member extending axially along the receptacle for forming inside of the receptacle a hydrogen gas flow passage leading to said opening of the receptacle, said porous member being permeable to hydrogen gas but impermeable to metal hydride, characterized in that a heat-conducting fin device (2, 2′, 16) of a heat-conductive material is provided in the receptacle (1) in order to transmit heat between the metal hydride (3) and the heat-exchanging outside wall surface and to limit the location of the metal hydride in the receptacle, the heat-conducting fin device being composed of a plurality of plate-like members (2, 2′) extending axially in the receptacle and of a tubular member (16) received within the pressure receptacle (1) in contact with the inside wall surface of the receptacle. said plate-like members projecting towards the central axis of the receptacle from said tubular member and being formed unitarily therewith.

2. Reactor according to claim 1, characterized in that the porous member (4) is tubular and is supported approximately at the axis of the receptacle (1) by the inside ends of at least some of the plate-like members (2).

**Revendications**

1. Réacteur à hydrures métalliques comprenant un réceptacle sous pression tubulaire comportant une ouverture à l'une de ses extrémités et contenant un hydrure métallique qui y est introduit, au moins une partie de la surface extérieure de la paroi du réceptacle sous pression formant une surface d'échange de chaleur, et un élément poreux s'étendant axialement le long du réceptacle pour former, à l'intérieur du réceptacle, un passage d'écoulement de gaz hydrogène aboutissant à ladite ouverture du réceptacle, ledit élément poreux perméable au gaz hydrogène, mais imperméable à l'hydrure métallique, caractérisé en ce qu'un dispositif à ailettes (2, 2′, 16) en une matière thermoconductrice est présent dans le réceptacle (1) pour transmettre de la chaleur entre l'hydrure métallique (3) et la surface extérieure de la paroi échangeant de la chaleur, et pour limiter l'emplacement de l'hydrure métallique dans le réceptacle, le dispositif à ailettes thermoconducteur comprenant une pluralité d'éléments (2, 2′) en forme de plaques dirigés axialement dans le réceptacle et un élément tubulaire (16) reçu à l'intérieur du réceptacle sous pression (1) en contact avec la surface intérieure de la paroi du réceptacle, lesdits éléments en forme de plaque faisant saillie vers l'axe central du réceptacle à partir dudit élément tubulaire et étant formés d'un seul tenant avec l.

2. Réacteur selon la revendication 1, caractérisé en ce que l'élément poreux (4) est tubulaire et est supporté approximativement suivant l'axe du réceptacle (1) par les extrémités intérieures de certains au moins des éléments en forme de plaque (2).

**Patentansprüche**

1. Metallhydridreaktor mit einem röhrenförmigen Druckbehälter, der an seinem einen Ende eine Öffnung aufweist und ein in ihn eingefülltes Metallhydrid enthält, wobei mindestens ein Teil der Außenwandoberfläche des Druckbehälters eine wärmeaustauschende Oberfläche bildet, und einem porösen Element, das axial entlang des Behälters verläuft und im Inneren des Behälters einen Wasserstoffgasdurchfluß bildet, der zu der Öffnung des Behälters führt, wobei das poröse Element für Wasserstoffgas durchlässig, aber für Metallhydrid undurchlässig ist, dadurch gekennzeichnet, daß eine wärmeübertragende Rippenvorrichtung (2, 2', 16) aus einem wärmeübertragenden Werkstoff in dem Behälter (1) vorgesehen ist, um die Wärme zwischen dem Metallhydrid (3) und der wärmeaustauschenden Außenwandoberfläche zu übertragen und den Platz des Metallhydrids in dem Behälter zu begrenzen, wobei die wärmeübertragende Rippenvorrichtung aus einer Vielzahl von plattenartigen Elementen (2, 2'), die in axialer Richtung in dem Druckbehälter verlaufen, und einem röhrenförmigen Element (16) besteht, das innerhalb des Druckbehälters (1) aufgenommen ist und mit der Innenwandoberfläche des Behälters in Kontakt steht, wobei die plattenartigen Elemente in Richtung der Mittelachse des Behälters von dem röhrenförmigen Element vorstehen und mit diesem einstückig ausgebildet sind.

2. Reaktor nach Anspruch 1, dadurch gekennzeichnet, daß das poröse Element (4) röhrenförmig ist und annähernd in der Achse des Behälters (1) mittels der inneren Enden von mindestens einigen der plattenartigen Elemente (2) gehalten ist.

0 061 191

FIG. 1

FIG. 2

FIG. 3

FIG. 4

FIG. 5